Europäisches Patentamt

European Patent Office

Office européen des brevets

(19)

(11) Numéro de publication: **0 236 193**
**B1**

(12)     **FASCICULE DE BREVET EUROPEEN**

(45) Date de publication du fascicule du brevet:
09.05.90

(51) Int. Cl.⁵: **C03C 3/32**

(21) Numéro de dépôt: 87400281.9

(22) Date de dépôt: 06.02.87

(54) **Nouveaux verres à base d'halogénure de tellure, leur préparation, et leur application notamment dans les domaines de l'optoélectronique et de la transmission infrarouge.**

(30) Priorité: 07.02.86 FR 8601683

(43) Date de publication de la demande:
09.09.87 Bulletin 87/37

(45) Mention de la délivrance du brevet:
09.05.90 Bulletin 90/19

(84) Etats contractants désignés:
AT BE CH DE ES GB GR IT LI LU NL SE

(56) Documents cités:
CHEMICAL ABSTRACTS,
vol. 82, no. 2, 13 janvier 1985, page 409, no. 10326t,
Columbus, Ohio, US; V.V. KHIMINETS et al.:
"Vitrification, switching and memory effects of glasses
in potassium-arsenic (antimony)-sulfur
(selenium,tellurium)-bromine (iodine) systems" & IZV.
VYSSH. UCHEBN. ZAVED., FIZ. 1974, 17(9), 11-15 000
JOURNAL OF APPLIED CHEMISTRY OF THE U.S.S.R.,
vol. 48, no. 6, 2 juin 1975, pages 1408-1409, Plenum
Publishing Corporation, New York, US; I.D.
TURYANITSA et al.: "Chemical stability of chalcohalide
glasses in quaternary systems of the type K - A V - B VI -
C VII" IZV. VYSSH. UCHEBN. ZAVED.,
FIZ. 1974, 17(9), 11-15 000

(73) Titulaire: CENTRE NATIONAL DE LA RECHERCHE
SCIENTIFIQUE (CNRS), 15, Quai Anatole France,
F-75007 Paris(FR)

(72) Inventeur: Lucas, Jacques, 34 rue du Parc,
F-35830 Betton(FR)
Inventeur: Zhang, Xiang Hua Chambre 275 Bâtiment C,
Cité Universitaire Avenue des Buttes de Couesnes,
F-35700 Rennes(FR)

(74) Mandataire: Tonnellier, Jean-Claude et al, Cabinet Nony
& Cie. 29, rue Cambacérès, F-75008 Paris(FR)

**Description**

La présente invention a pour objet de nouveaux verres à base d'halogénure de tellure, leur préparation et leur application notamment dans les domaines de l'optoélectronique et de la transmission infrarouge.

On connaissait déjà les diagrammes de phase liquide-solide cristallisé des systèmes Te-TeCl₄ et Te-TeBr₄, voir par exemple A. RABENAU et al., Z. anorg. allg. Chem. 395, 273-279 (1973).

On a maintenant découvert qu'il existe dans les systèmes tellure-halogène une assez large zone vitreuse permettant d'obtenir des verres ayant notamment des propriétés de semi-conducteurs. Ces verres semi-conducteurs qui présentent une absorption quasi-totale de la lumière visible et de l'infrarouge, peuvent être dopés notamment avec des faibles quantités de soufre ou de sélénium. En outre, on a également découvert qu'il est possible d'améliorer la transmission de ces verres dans l'infrarouge par simple addition d'un élément supplémentaire tel que le soufre ou le sélénium.

Pour les systèmes tellure-halogène-soufre (ou sélénium), on n'a pas pu observer de cristallisation.

Les verres obtenus sont transmetteurs de l'infrarouge dans la bande de longueurs d'onde pouvant aller de 8 à 16 μm environ, et en particulier dans la fenêtre 8-12 μm. Ces verres peuvent donc être utilisés notamment dans les dispositifs à infrarouge utilisant les lasers au CO₂ émettant à 10,6 μm.

La présente invention a donc pour objet des compositions solides vitreuses de formule I :

$$Te_{100-x-z} X_x Z_z \text{ (I)}$$

dans laquelle

X représente au moins un halogène choisi parmi le chlore, le brome et l'iode,

Z représente le soufre et/ou le sélénium,

x est un nombre représentant le pourcentage molaire de l'élément X et pouvant varier de 5 à 67,

z est un nombre représentant le pourcentage molaire de l'élément Z et pouvant varier de 0 à 60,

étant entendu que la somme (x + z) peut varier de 33 à 85.

Parmi les verres de formule I, on citera en particulier ceux pour lesquels X représente le chlore ; parmi ces derniers verres on citera en particulier ceux qui sont exempts de soufre et de sélénium, et pour lesquels x varie de 40 à 67 environ ; ces verres ont des propriétés de semi-conducteurs et peuvent être utilisés notamment en optoélectronique dans les systèmes utilisant les phénomènes de photoconduction.

Les verres du système Te-Br (X=Br) exempts de soufre et de sélénium sont en particulier ceux qui contiennent de 33 à 55% en mole de brome environ.

L'invention s'étend également aux verres tels que définis ci-dessus contenant plusieurs halogènes.

Parmi les verres contenant du soufre et/ou du sélénium, on citera en particulier ceux pour lesquels z varie de 5 à 60 et en particulier ceux pour lesquels z varie de 10 à 30. Comme indiqué ci-dessus, ces verres ont de bonnes propriétés de transmission dans l'infrarouge.

On a remarqué que l'addition de soufre ou de sélénium ne modifie que très peu les températures de ramollissement des verres tellure-halogène.

Par exemple, pour le verre $Te_3Cl_2$, Tg = 78°C, et pour le verre $Te_3Cl_2S$, Tg = 81°C ; pour le verre $Te_3Br_2$, Tg = 60°C, et pour le verre $Te_3Br_2S$, Tg = 62°C ; pour le verre $Te_3I_2$, Tg = 41°C, et pour le verre $Te_3I_2S$, Tg = 40°C.

L'invention a également pour objet un procédé de préparation des compositions de verres telles que définies ci-dessus.

Ce procédé est caractérisé par le fait que l'on mélange du tellure avec une source d'halogène et éventuellement avec du soufre et/ou du sélénium dans les proportions désirées (indiquées par la formule I), que l'on chauffe ledit mélange en atmosphère inerte ou sous vide à une température suffisante pour obtenir une fusion complète des matériaux de départ, que l'on homogénéise le liquide obtenu, et qu'on le refroidit pour obtenir un solide vitreux.

De préférence, la réaction est effectuée dans un tube scellé, après avoir fait le vide. On peut utiliser par exemple des tubes de verre pyrex.

La source d'halogène est l'halogène lui-même, ou encore TeCl₄.

Généralement on chauffe le mélange des produits de départ à une température de 200 à 300°C. Pour le refroidissement, une trempe n'est généralement pas nécessaire. Il suffit de laisser la composition refroidir jusqu'à la température ambiante.

Les compositions de verre de l'invention peuvent être obtenues notamment sous forme de pièces massives, de fibres ou de couches minces, selon les techniques classiques.

Elles peuvent en particulier être fibrées et servir de guide d'onde pour la lumière émise par les lasers au CO₂. En outre, leur large bande de transmission permet de les utiliser dans les appareils d'analyse du rayonnement infrarouge ou d'imagerie thermique.

Les dessins annexés représentent :

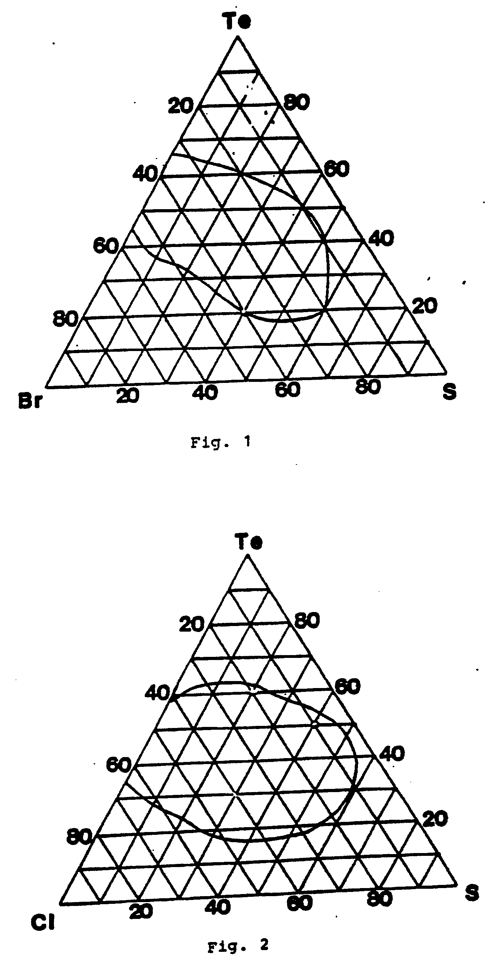

- Figure 1 : le diagramme du domaine vitreux dans le système Te-Br-S ;
- Figure 2 : le diagramme du domaine vitreux dans le système Te-Cl-S ;
- Figure 3 : le spectre de transmission infrarouge du verre de composition Te₃Cl₂S.

Les exemples suivants illustrent l'invention sans toutefois la limiter.

EXEMPLE 1

Au départ d'un mélange de tellure (Merck ; pureté 99,99%) et de $TeCl_4$ (Merk ; pureté 99%) dans les proportions molaires 60-40 on a obtenu, après chauffage en tube scellé sous vide à une température de 250-300°C, homogénéisation par agitation pendant 2 heures, puis refroidissement lent (5°C/minute par exemple), sans trempe, un matériau vitreux répondant à la formule $Te_3 Cl_2$. Le verre obtenu est noir, non hygroscopique. Il peut être manipulé et poli à l'air. Ses températures caractéristiques sont les suivantes:
- $T_g = 78$°C
- $T_c = 189$°C
- $T_f = 242$°C

Ce verre a des propriétés de semi-conducteur (gap = 0,8 électron-volt environ). Il est donc photoconducteur pour les longueurs d'onde inférieures à l,5 micromètre.

EXEMPLE 2

De façon analogue, on a préparé le verre de formule TeCl, de couleur noire, dont les températures caractéristiques sont les suivantes :
- $T_g = 65$°C
- $T_c = 183$°C
- $T_f = 237$°C

EXEMPLE 3

De façon analogue, on a préparé le verre de formule $TeCl_2$. Ce verre est hygroscopique et doit donc être manipulé en atmosphère sèche.

EXEMPLES 4 à 7

Par combinaison directe du brome liquide avec le tellure en tube scellé de verre, en chauffant à 300°C pendant 10 heures, en agitant constamment, puis en laissant refroidir à la température ambiante, on a obtenu les verres suivants.

| Exemples | Te 100−x | Br x |
|---|---|---|
| 4 | 66,7 | 33,3 |
| 5 | 60 | 40 |
| 6 | 50 | 50 |
| 7 | 45 | 55 |

EXEMPLE 8

De façon analogue à celle décrite à l'exemple 1, en incorporant des quantités convenables de soufre à un mélange de Te et $TeCl_4$ correspondant aux proportions $Te_3Cl_2$, on a préparé le verre $Te_3Cl_2S$ caractérisé par une température de ramollissement (Tg) de 81°C pour une vitesse de montée en température de 5°C par minute. On n'a pas observé de cristallisation pour cette composition mais un début de décomposition vers 200°C (sous argon).

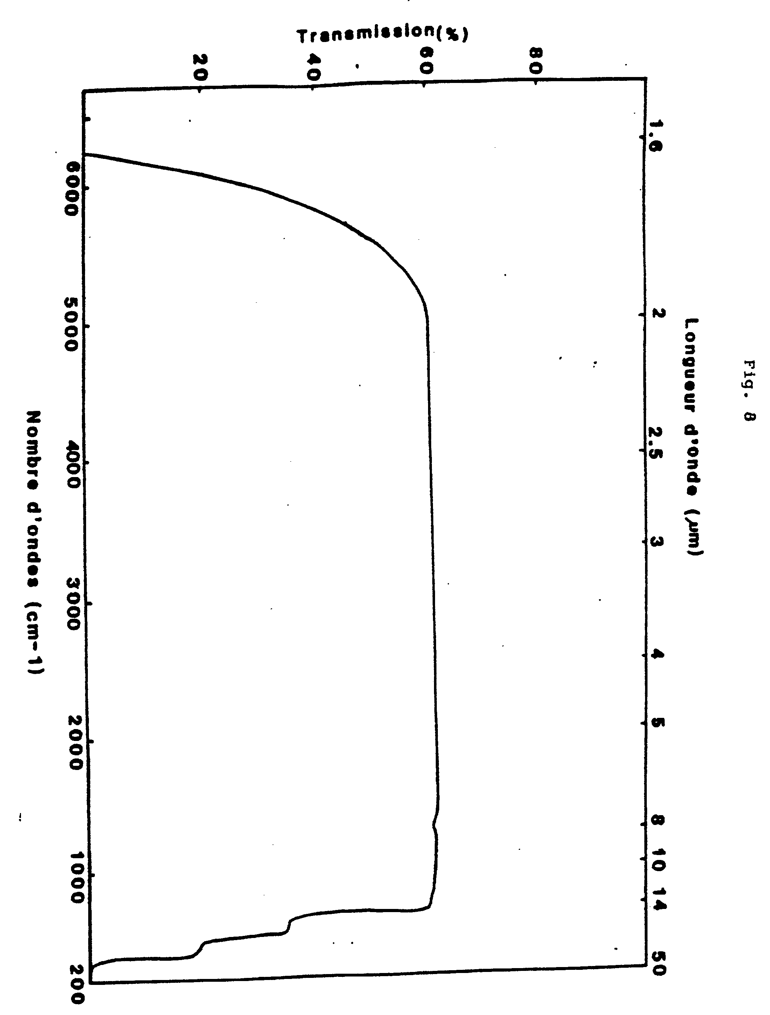

La figure 3 représente le spectre de transmission de ce verre dans l'infrarouge.

EXEMPLES 9 à 15

De façon analogue à celle de l'exemple 8 on a préparé les verres suivants, dont les proportions respectives de Te et Cl correspondent à $Te_3Cl_2$ :

| Exemples | Te 100−x−z | Cl x | S z |
|---|---|---|---|
| 9 | 54,6 | 36,4 | 9 |
| 10 | 51,7 | 34,5 | 13,8 |
| 11 | 46,1 | 30,8 | 23,1 |
| 12 | 42,8 | 28,6 | 28,6 |
| 13 | 37,5 | 25 | 37,5 |
| 14 | 33,3 | 22,2 | 44,5 |
| 15 | 30 | 20 | 50 |

EXEMPLES 16 à 19

Ces exemples concernent des verres qui répondent à la formule $M_3Cl_2$ (avec M = Te + S). On obtient sous forme de verres les compositions suivantes:

| Exemples | Te 100−x−z | Cl x | S z |
|---|---|---|---|
| 16 | 50 | 10 | 40 |
| 17 | 40 | 20 | 40 |
| 18 | 30 | 30 | 40 |
| 19 | 20 | 40 | 40 |

EXEMPLES 20 à 29

De façon analogue on a préparé des verres ayant les compositions suivantes.

| Exemples | Te 100−x−z | Cl x | S z |
|---|---|---|---|
| 20 | 60 | 30 | 10 |
| 21 | 60 | 20 | 20 |
| 22 | 50 | 10 | 40 |
| 23 | 40 | 10 | 50 |
| 24 | 20 | 30 | 50 |
| 25 | 20 | 50 | 30 |
| 26 | 30 | 60 | 10 |
| 27 | 30 | 50 | 20 |
| 28 | 40 | 50 | 10 |
| 29 | 55 | 15 | 30 |

EXEMPLES 30 à 34

De façon analogue on a préparé des verres ayant les compositions suivantes.

| Exemples | Te 100−x−z | Br x | S z |
|---|---|---|---|
| 30 | 60 | 30 | 10 |
| 31 | 57,1 | 28,6 | 14,3 |
| 32 | 50 | 25 | 25 |
| 33 | 40 | 20 | 40 |
| 34 | 33,3 | 16,7 | 50 |

## EXEMPLES 35 à 38

De façon analogue on a préparé des verres répondant à la forumle $M_3Br_2$ avec M = Te + S.

| Exemples | Te 100−x−z | Br x | S z |
|---|---|---|---|
| 35 | 50 | 10 | 40 |
| 36 | 40 | 20 | 40 |
| 37 | 30 | 20 | 20 |
| 38 | 20 | 40 | 40 |

## EXEMPLES 39 à 44

De façon analogue, on préparé les verres suivants.

| Exemples | Te 100−x−z | Br x | S z |
|---|---|---|---|
| 39 | 60 | 20 | 20 |
| 40 | 50 | 10 | 40 |
| 41 | 40 | 10 | 50 |
| 42 | 20 | 20 | 60 |
| 43 | 20 | 30 | 50 |
| 44 | 40 | 50 | 10 |

## EXEMPLE 45 à 50

De façon analogue à celle décrite aux exemples 8 à 15 (en remplaçant le soufre par le sélénium) on a préparé des verres ayant les compositions suivantes.

| Exemples | Te 100−x−z | Cl x | Se z |
|---|---|---|---|
| 45 | 54,6 | 36,4 | 9 |
| 46 | 51,7 | 34,5 | 13,8 |
| 47 | 50 | 33,3 | 16,7 |
| 48 | 46,1 | 30,8 | 23,1 |
| 49 | 42,8 | 28,6 | 28,6 |
| 50 | 37,5 | 25 | 37,5 |

EXEMPLES 51 à 53

En opérant de façon analogue à celle décrite à l'exemple 1, au départ de tellure et d'iode en proportions convenables, on a obtenu , par chauffage vers 200°C, homogénéisation à cette température pendant 2 heures, puis refroidissement à température ambiante, un verre de composition Te$_3$I$_2$ (exemple 52). En faisant varier les proportions de tellure et d'iode on a obtenu les verres suivants :

| Exemples | Te 100–x | I x |
|---|---|---|
| 51 | 66,7 | 33,3 |
| 52 | 60 | 40 |
| 53 | 50 | 50 |

EXEMPLE 54 à 58

De façon analogue à celle décrite aux exemples 8 à 15, avec des mélanges de tellure, d'iode et de soufre, on a préparé des verres ayant les compositions suivantes :

| Exemples | Te 100–x–z | I x | S z |
|---|---|---|---|
| 54 | 54,6 | 36,4 | 9 |
| 55 | 51,7 | 34,5 | 13,8 |
| 56 | 50 | 33,3 | 16,7 |
| 57 | 46,1 | 30,8 | 23,1 |
| 58 | 42,8 | 28,6 | 28,6 |

**Revendications**

1. Compositions solides vitreuses de formule I:

Te$_{100-x-z}$ X$_x$ Z$_z$ (I)

dans laquelle

X représente au moins un halogène choisi parmi le chlore, le brome et l'iode,

Z représente le soufre et/ou le sélénium,

x est un nombre représentant le pourcentage molaire de l'élément X et pouvant varier de 5 à 67,

z est un nombre représentant le pourcentage molaire de l'élément Z et pouvant varier de 0 à 60,

étant entendu que la somme (x + z) peut varier de 33 à 85.

2. Compositions selon la revendication 1, caractérisées par le fait que X représente le chlore.

3. Compositions selon la revendication 2, caractérisées par le fait qu'elles sont exemptes de soufre et de sélénium, et que x varie de 40 à 67.

4. Compositions selon la revendication 1, caractérisées par le fait que X représente le brome.

5. Compositions selon la revendication 4, caractérisées par le fait qu'elles sont exemptes de soufre et de sélénium et que x varie de 33 à 55.

6. Compositions selon la revendication 1, caractérisées par le fait que x représente l'iode.

7. Compositions selon l'une quelconque des revendications 1, 2, 4, et 6, caractérisées par le fait que z varie de 5 à 60.

8. Compositions selon la revendication 7, caractérisées par le fait que z varie de 10 à 30.

9. Procédé de préparation des compositions telles que définies dans l'une quelconque des revendications précédentes, caractérisé par le fait que l'on mélange du tellure aveo une source d'halogène, et éventuellement avec du soufre et/ou du sélénium dans les proportions désirées, que l'on chauffe ledit mélange en atmosphère inerte ou sous vide à une température suffisante pour obtenir une fusion complète des matériaux de départ, que l'on homogénéise le liquide obtenu et qu'on le refroidit pour obtenir un solide vitreux.

10. Procédé selon la revendication 9, caractérisé par le fait que la source d'halogène est l'halogène considéré, ou TeCl$_4$.

11. Compositions selon l'une quelconque des revendications 1 à 5, caractérisées par le fait qu'elles se présentent sous la forme de pièces massives, de fibres ou de couches minces.

**Patentansprüche**

1. Feste Glaszubereitungen der Formel 1:
$Te_{100-x-z}X_xZ_z$ (I)
in der
X mindestens ein Halogen, ausgewählt aus Chlor, Brom und Jod ist,
Z Schwefel und/oder Selen bedeutet,
x eine Zahl ist, welche den molaren Prozentsatz des Elements X darstellt und von 5 bis 67 schwanken kann,
z eine Zahl ist, welche den molaren Prozentsatz des Elements Z darstellt und von 0 bis 60 schwanken kann, wobei die Summe (x + z) von 33 bis 85 schwanken kann.

2. Zubereitungen nach Anspruch 1, dadurch gekennzeichnet, dass X Chlor ist.

3. Zubereitungen nach Anspruch 2, dadurch gekennzeichnet, dass sie frei von Schwefel und Selen sind und x von 40 bis 67 schwankt.

4. Zubereitungen nach Anspruch 1, dadurch gekennzeichnet, dass X Brom ist.

5. Zubereitungen nach Anspruch 4, dadurch gekennzeichnet, dass sie frei von Schwefel und Selen sind und x von 33 bis 55 schwankt.

6. Zubereitungen nach Anspruch 1, dadurch gekennzeichnet, dass X Jod ist.

7. Zubereitungen nach einem der Ansprüche 1, 2, 4 und 6, dadurch gekennzeichnet dass z von 5 bis 60 schwankt.

8. Zubereitungen nach Anspruch 7, dadurch gekennzeichnet, dass z von 10 bis 30 schwankt.

9. Verfahren zur Herstellung von Zubereitungen, wie sie in einem der vorstehenden Ansprüche definiert sind, dadurch gekennzeichnet, dass man Tellur mit einer Halogenquelle und gegebenenfalls mit Schwefel und/oder Selen in den gewünschten Mengenverhältnissen mischt, das Gemisch in einer inerten Atmosphäre oder im Vakuum auf eine Temperatur erhitzt, die ausreicht, eine vollständige Verschmelzung der Ausgangsstoffe zu erzielen und dass man die erhaltene Schmelze homogenisiert und zur Erzielung eines festen Glases abkühlt.

10. Verfahren nach Anspruch 9, dadurch gekennzeichnet, dass die Halogenquelle das gemischte Halogen selbst oder $TeCl_4$ ist.

11. Zubereitungen nach einem der Ansprüche 1 bis 5, dadurch gekennzeichnet, dass sie in Form von festen Stücken, von Fasern oder von dünnen Schichten vorliegen.

**Claims**

1. Glassy solid compositions of formula I:
$Te_{100-x-z}X_xZ_z$ (1)
in which
X denotes at least one halogen chosen from chlorine, bromine and iodine,
Z denotes sulphur and/or selenium,
x is a number denoting the molar percentage of the element X and capable of varying from 5 to 67,
z is a number denoting the molar percentage of the element Z and capable of varying from 0 to 60, it being understood that the sum (x + z) may vary from 33 to 85.

2. Compositions according to claim 1, chatacterized in that X denotes chlorine.

3. Compositions according to claim 2, characterized in that they are free from sulphur and selenium and that x varies from 40 to 67.

4. Compositions according to claim 1, characterized in that X denotes bromine.

5. Compositions according to claim 4, characterized in that they are free from sulphur and selenium and that x varies from 33 to 55.

6. Compositions according to claim 1, characterized in that x denotes iodine.

7. Compositions according to any one of claims 1, 2, 4, and 6, characterized in that z varies from 5 to 60.

8. Compositions according to claim 7, characterized in that z varies from 10 to 30.

9. Process for preparation of compositions such as defined in any one of the preceding claims, characterized in that tellurium is mixed with a source of halogen, and optionally with sulphur and/or selenium in the desired proportions, that the said mixture is heated in an inert atmosphere or under vacuum to a sufficient temperature to obtain a complete fusion of the starting materials, that the liquid obtained is homogenized and that it is cooled to obtain a glassy solid.

10. Process according to claim 9, characterized in that the source of halogen in the halogen in question or $TeCl_4$.

11. Compositions according to any one of claims 1 to 5, characterized in that they are in the form of bulky pieces, fibres or thin layers.

Fig. 1

Fig. 2

Fig. 8